# EUROPÄISCHE PATENTANMELDUNG

(11) **EP 3 812 949 A1**
(43) Veröffentlichungstag der Anmeldung: **28.04.2021**
(21) Anmeldenummer: 19204342.0
(22) Anmeldetag: 21.10.2019
(51) Int. Cl.: G06F 30/20, G06F 113/04

(54) **KONFIGURIERBARER DIGITALER ZWILLING**

(71) Anmelder: Siemens Aktiengesellschaft, 80333 München (DE)
(72) Erfinder: Essl, Alexander, 91052 Erlangen (DE); Heuer, Christian, 21220 Seevetal (DE); Schuler, Markus, 91126 Schwabach (DE)

(57) **Zusammenfassung**

Es wird ein Verfahren zum Simulieren einer Mehrzahl von Aspekten eines Systems beschrieben. Das beschriebene Verfahren weist Folgendes auf: (a) Erstellen einer Mehrzahl von Modellen eines Systems, wobei jedes einzelne Modell einen bestimmten Aspekt des Systems beschreibt, (b) Bestimmen eines initialen ersten Datensatzes und eines initialen zweiten Datensatzes für jedes Modell, wobei der erste initiale Datensatz spezifische Daten aufweist, die nur von dem Modell verwendet werden, und wobei der zweite initiale Datensatz gemeinsame Daten aufweist, die von dem Modell und zumindest einem anderen Modell verwendet werden, (c) Auswählen eines ersten Modells und eines zweiten Modells aus der Mehrzahl von Modellen, (d) Bestimmen eines aktualisierten ersten Datensatzes und eines aktualisierten zweiten Datensatzes für das erste Modell basierend auf dem initialen ersten Datensatz für das erste Modell und den initialen zweiten Datensätzen, und (e) Bestimmen eines aktualisierten ersten Datensatzes und eines aktualisierten zweiten Datensatzes für das zweite Modell basierend auf dem initialen ersten Datensatz für das zweite Modell, dem aktualisierten zweiten Datensatz für das erste Modell und den initialen zweiten Datensätzen für alle Modelle der Mehrzahl von Modellen außer dem ersten Modell. Des Weiteren werden eine Vorrichtung und ein Computerprogramm beschrieben.

## Beschreibung

Die vorliegende Erfindung betrifft das technische Gebiet der Simulation von realen Systemen. Die vorliegende Erfindung betrifft insbesondere ein Verfahren zum Simulieren einer Mehrzahl von Aspekten eines Systems. Die vorliegende Erfindung betrifft ferner eine Vorrichtung und ein Computerprogramm zum Durchführen des Verfahrens.

Ein "digitaler Zwilling" ist eine Darstellung eines realen Systems in einem digitalen Kontext (IT-System) mit der Möglichkeit, die Zeit einzustellen (d.h. das System schnell oder langsam von der Vergangenheit über die Gegenwart bis in die Zukunft zu betrachten).

Reale Systeme können schon mit bekannten Software-Tools modelliert und simuliert werden. Diese Simulationen sind aber auf einen bestimmten Aspekt des Systems beschränkt. Ein Energieversorgungsunternehmen mag zum Beispiel eine Simulation eines elektrischen Netzwerks durchführen können, aber diese Simulation berücksichtigt zum Beispiel nicht Wartung oder Finanzwerte). Durch Verwendung von "Co-Simulation" (Koppeln mit einer weiteren Simulation) kann der simulierte Aspekt hinsichtlich Details und Präzision verbessert werden.

Eine echte Implementierung eines "digitalen Zwillings" sollte aber mehrere Aspekte eines realen Systems abdecken. Dies ermöglicht eine komplexe Simulation des Systems, wobei ein Energieversorgungsunternehmen zum Beispiel die folgenden Aspekte haben könnte: elektrisches Netz, Wartung, Energiehandel, Finanzwerte, etc. Eine solche Simulation ermöglicht einen viel detaillierteren Einblick in die Abhängigkeiten zwischen den einzelnen Aspekten, erhöht das Verständnis des ganzen Systems und ermögliche eine globale anstelle einer lokalen Optimierung für einen bestimmten Aspekt des Systems.

Der vorliegenden Erfindung liegt die Aufgabe zugrunde, eine solche Simulation zu ermöglichen.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Verfahren zum Simulieren einer Mehrzahl von Aspekten eines Systems beschrieben. Das beschriebene Verfahren weist Folgendes auf: (a) Erstellen einer Mehrzahl von Modellen eines Systems, wobei jedes einzelne Modell einen bestimmten Aspekt des Systems beschreibt, (b) Bestimmen eines initialen ersten Datensatzes und eines initialen zweiten Datensatzes für jedes Modell, wobei der erste initiale Datensatz spezifische Daten aufweist, die nur von dem Modell verwendet werden, und wobei der zweite initiale Datensatz gemeinsame Daten aufweist, die von dem Modell und zumindest einem anderen Modell verwendet werden, (c) Auswählen eines ersten Modells und eines zweiten Modells aus der Mehrzahl von Modellen, (d) Bestimmen eines aktualisierten ersten Datensatzes und eines aktualisierten zweiten Datensatzes für das erste Modell basierend auf dem initialen ersten Datensatz für das erste Modell und den initialen zweiten Datensätzen, und (e) Bestimmen eines aktualisierten ersten Datensatzes und eines aktualisierten zweiten Datensatzes für das zweite Modell basierend auf dem initialen ersten Datensatz für das zweite Modell, dem aktualisierten zweiten Datensatz für das erste Modell und den initialen zweiten Datensätzen für alle Modelle der Mehrzahl von Modellen außer dem ersten Modell.

Dem beschriebenen Verfahren liegt die Erkenntnis zugrunde, dass nach Bestimmung von initialen ersten und zweiten Datensätze, die jeweils modellspezifischen Daten und gemeinsame Daten, für jedes Modell und Auswählen eines ersten und eines zweiten Modells, eine Bestimmung von aktualisierten ersten und zweiten Datensätze für eins der ausgewählten Modelle nach dem anderen durchgeführt wird. Mit anderen Worten werden schon aktualisierte Datensätze für ein (erstes) Modell bei der Bestimmung von aktualisierten Datensätze für ein weiteres (zweites) Modell verwendet. Somit können die Abhängigkeiten zwischen den einzelnen Aspekten (Modellen) durch eine Auswahl der Reihenfolge der Modelle sowohl überprüft als auch beeinfluss werden.

Gemäß einem Ausführungsbeispiel der Erfindung weist das Auswählen ferner ein Auswählen eines dritten Modells aus der Mehrzahl von Modellen auf und das Verfahren weist ferner ein Bestimmen eines aktualisierten ersten Datensatzes und eines aktualisierten zweiten Datensatzes für das dritte Modell basierend auf dem initialen ersten Datensatz für das dritte Modell, dem aktualisierten zweiten Datensatz für das erste Modell, dem aktualisierten zweiten Datensatz für das zweite Modell und den initialen zweiten Datensätzen für alle Modelle der Mehrzahl von Modellen außer dem ersten Modell und dem zweiten Modell auf.

Mit anderen Worten wird in diesem Ausführungsbeispiel zusätzlich zu dem ersten und zweiten Modell noch ein drittes Modell aus der Mehrzahl von Modellen ausgewählt. Des Weiteren werden einen aktualisierten ersten Datensatz sowie einen aktualisierten zweiten Datensatz für dieses dritte Modell bestimmt. Diese Bestimmung basiert auf den schon (für das erste und zweite Modell) bestimmten aktualisierten Datensätzen sowie den initialen zweiten Datensätzen für das dritte und alle weiteren Modelle.

Gemäß einem weiteren Ausführungsbeispiel der Erfindung wird das Auswählen des ersten, des zweiten und gegebenenfalls des dritten Modells aus der Mehrzahl von Modellen durch einen Benutzer vorgenommen.

Das Auswählen der Modelle (und somit der Reihenfolge, in der die aktualisierten Datensätze bestimmt werden) durch den Benutzer erfolgt vorzugsweise als Teil einer Konfiguration einer Simulationssoftware.

Gemäß einem weiteren Ausführungsbeispiel der Erfindung weist das Verfahren ferner Folgendes auf: (a) Überprüfen der aktualisierten ersten Datensätze und der aktualisierten zweiten Datensätze und in Abhängigkeit von dem Überprüfen: (b) erneutes Auswählen eines ersten Modells, eines zweiten Modells und gegebenenfalls dritten Modells aus der Mehrzahl von Modellen und (c) erneutes Bestimmen von aktualisierten ersten Datensätzen und aktualisierten zweiten Datensätzen für die ausgewählten Modelle.

In diesem Ausführungsbeispiel werden die aktualisierten Datensätze überprüft, zum Beispiel dadurch, dass der Benutzer die Datensätze oder daraus abgeleitete (zum Beispiel berechnete) Daten überprüft. Falls die Überprüfung eine Abweichung von erwarteten oder bekannten Werten ergibt, wird das Auswählen der Modelle erneut durchgeführt, damit insbesondere eine andere Reihenfolge der Schritte zum Bestimmen der aktualisierten Datensätzen festgelegt werden kann. Wurden zuvor ein Modell A als erstes Modell, ein Modell B als zweites Modell und ein Modell C als drittes Modell ausgewählt, dann wird nun zum Beispiel das Modell B als erstes Modell, das Modell A als zweites Modell und das Modell C als drittes Modell ausgewählt. Nach dem erneuten Auswählen der Modelle, werden die aktualisierten Datensätze entsprechende der neuen Auswahl durchgeführt, um möglichst eine bessere Übereinstimmung zwischen Simulation und Realität zu erlangen.

Gemäß einem weiteren Ausführungsbeispiel der Erfindung weist das Verfahren ferner Folgendes auf: (a) Bestimmen eines weiteren aktualisierten ersten Datensatzes und eines weiteren aktualisierten zweiten Datensatzes für das erste Modell basierend auf dem aktualisierten ersten Datensatz für das erste Modell und den aktualisierten zweiten Datensätzen, und (b) Bestimmen eines weiteren aktualisierten ersten Datensatzes und eines weiteren aktualisierten zweiten Datensatzes für das zweite Modell basierend auf dem aktualisierten ersten Datensatz für das zweite Modell, dem weiteren aktualisierten zweiten Datensatz für das erste Modell und den aktualisierten zweiten Datensätzen für alle Modelle der Mehrzahl von Modellen außer dem ersten Modell.

In diesem Ausführungsbeispiel werden die zuvor bestimmten aktualisierten Datensätze als Grundlage für die Bestimmung von weiteren aktualisierten Datensätzen verwendet.

Gemäß einem weiteren Ausführungsbeispiel der Erfindung weist das Verfahren ferner Folgendes auf: Bestimmen eines weiteren aktualisierten ersten Datensatzes und eines weiteren aktualisierten zweiten Datensatzes für das dritte Modell basierend auf dem aktualisierten ersten Datensatz für das dritte Modell, dem weiteren aktualisierten zweiten Datensatz für das erste Modell, dem weiteren aktualisierten zweiten Datensatz für das zweite Modell und den aktualisierten zweiten Datensätzen für alle Modelle der Mehrzahl von Modellen außer dem ersten Modell und dem zweiten Modell.

Gemäß einem weiteren Ausführungsbeispiel der Erfindung entsprechen die aktualisierten ersten Datensätze und die aktualisierten zweiten Datensätze einem ersten Zeitpunkt und die weiteren aktualisierten ersten Datensätze und die weiteren aktualisierten zweiten Datensätze entsprechen einem zweiten Zeitpunkt, insbesondere einem nach dem ersten Zeitpunkt liegenden zweiten Zeitpunkt.

Mit anderen Worten stellen die aktualisierten ersten und die aktualisierten zweiten Datensätze das System zum ersten Zeitpunkt dar, während die weiteren aktualisierten ersten Datensätze und die weiteren aktualisierten zweiten Datensätze das System zum zweiten Zeitpunkt darstellen.

Gemäß einem zweiten Aspekt der Erfindung wird eine Vorrichtung zum Simulieren einer Mehrzahl von Aspekten eines Systems beschrieben. Die Vorrichtung weist einen Datenspeicher und einen Prozessor auf, wobei die Vorrichtung zum Durchführen des Verfahrens gemäß dem ersten Aspekt oder einem der obigen Ausführungsbeispiele eingerichtet ist.

Die Vorrichtung gemäß dem zweiten Aspekt ist zum Durchführen des Verfahrens gemäß dem ersten Aspekt eingerichtet und stellt folglich die oben in Verbindung mit dem ersten Aspekt erläuterten Vorteile für einen Benutzer der Vorrichtung bereit.

Gemäß einem dritten Aspekt der Erfindung wird ein Computerprogramm beschrieben. Das Computerprogramm weist eine Mehrzahl von computerausführbaren Befehlen auf, die, wenn sie von einem Prozessor eines Computersystems ausgeführt werden, bewirken, dass der Prozessor das Verfahren gemäß dem ersten Aspekt oder einem der obigen Ausführungsbeispiele durchführt.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Verfahrensansprüchen und andere Ausführungsformen der Erfindung mit Vorrichtungsansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung einer bevorzugten Ausführungsform.
Figur 1 zeigt ein Modell eines Systems mit mehreren Aspekten und gemeinsamen Daten gemäß einem Ausführungsbeispiel der Erfindung.
Figur 2 zeigt eine Datenstruktur gemäß einem Ausführungsbeispiel der Erfindung.
Figur 3 zeigt Simulationsdatensätze zu mehreren aufeinander folgenden Zeitpunkten.
Figur 4 zeigt den Ablauf eines Simulations- und Konfigurationsprozesses gemäß einem Ausführungsbeispiel der Erfindung.

Es wird darauf hingewiesen, dass die nachfolgend beschriebenen Ausführungsformen lediglich eine beschränkte Auswahl an möglichen Ausführungsvarianten der Erfindung darstellt.

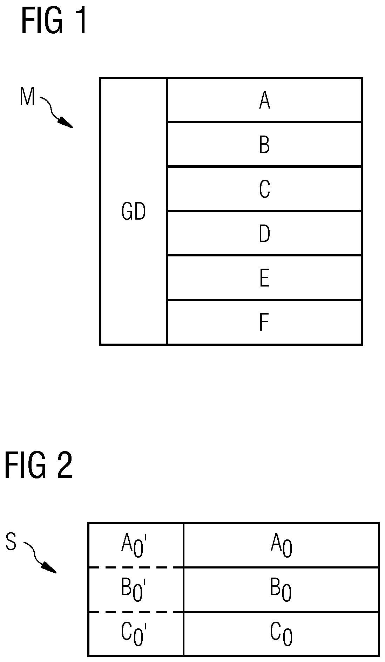

Die Figur 1 zeigt ein Modell M eines Systems mit mehreren Aspekten A, B, C, D, E, F und gemeinsamen Daten GD gemäß einem Ausführungsbeispiel der Erfindung. Die einzelnen Aspekte A, B, C, D, E, F können zum Beispiel verschiedene Aspekte eines Energieversorgungsunternehmens sein, wie etwa ein Modell eines elektrischen Versorgungsnetzes, ein Wartungsmodell, ein Energiehandelsmodell, ein Finanzmodell, usw. Jedes Modell A, B, C, D, E, F verwendet zumindest einen Teil der gemeinsamen Daten GD.

Figur 2 zeigt eine Datenstruktur S gemäß einem Ausführungsbeispiel der Erfindung. In diesem Beispiel umfasst das Modell drei Aspekte A, B, C und die Datenstruktur weist für jeden Aspekt zwei Datensätze auf, nämlich einen ersten Datensatz mit modellspezifischen Daten, d.h. Daten, die nur für den jeweiligen Aspekt relevant sind, und einen zweiten Datensatz mit gemeinsamen Daten, d.h. Daten, die für den jeweiligen Aspekt und für zumindest einen weiteren Aspekt relevant sind. Spezifischer zeigt die Figur 2 einen ersten Datensatz AO mit spezifischen Daten für den Aspekt A und einen zweiten Datensatz A0' mit gemeinsamen Daten für den Aspekt A und zumindest einen der beiden weiteren Aspekte B, C. In ähnlicher Weise zeigt die Figur 2 einen ersten Datensatz B0 mit spezifischen Daten für den Aspekt B, einen zweiten Datensatz B0' mit gemeinsamen Daten für den Aspekt B und zumindest einen der beiden weiteren Aspekte A, C, einen ersten Datensatz C0 mit spezifischen Daten für den Aspekt C und einen zweiten Datensatz C0' mit gemeinsamen Daten für den Aspekt C und zumindest einen der beiden weiteren Aspekte A, B. Die Tatsache, dass es sich bei den Datensätzen A0', B0', C0' um gemeinsame Datensätze handelt, ist in der Figure 2 durch gestrichelte Trennlinien dargestellt.

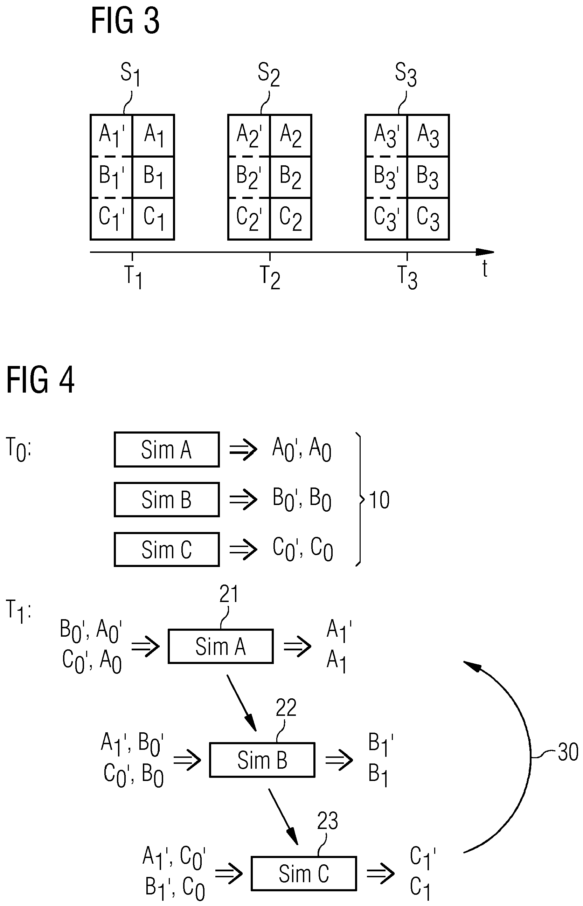

Figur 3 zeigt Simulationsdatensätze S1, S2, S3 zu mehreren aufeinander folgenden Zeitpunkten T1, T2, T3. Spezifischer zeigt die Figur 3 einen ersten Simulationsdatensatz S1 mit ersten (modellspezifischen) Datensätzen A1, B1, C1 und zweiten (gemeinsamen) Datensätzen A1', B1', C1'. Der Simulationsdatensatz S1 stellt das modellierte System zum Zeitpunkt T1 dar. In der gleichen Art und Weise stellt der zweite Simulationsdatensatz S2 mit ersten Datensätzen A2, B2, C2 und zweiten Datensätzen A2', B2', C2' den Zustand des modellierten Systems zu dem späteren Zeitpunkt T2 dar. Der dritte Simulationsdatensatz S3 mit ersten Datensätzen A3, B3, C3 und zweiten Datensätzen A3', B3', C3' stellt den Zustand des modellierten Systems zu dem noch späteren Zeitpunkt T3 dar. Die Datensätze S1, S2, S3 werden jeweils aufgrund vorhergehenden Datensätze S0 (nicht gezeigt), S1 und S2 berechnet, wie es unten in Verbindung mit der Figur 4 näher beschrieben ist.

Figur 4 zeigt den Ablauf eines Konfigurations- und Simulationsprozesses gemäß einem Ausführungsbeispiel der Erfindung. Nach Erstellung einer Mehrzahl von Modellen eines Systems, die bestimmte Aspekte A, B, C des Systems beschreiben, werden zum Zeitpunkt T0 im Verfahrensschritt 10 für jedes Modell A, B, C jeweils einen initialen ersten Datensatz A0, B0, C0 mit modellspezifischen Daten (d.h. Daten, die nur von dem jeweiligen Modell verwendet werden) und einen initialen zweiten Datensatz A0', B0', C0' mit gemeinsamen Daten (d.h. Daten, die von dem jeweiligen Modell und zumindest einem weiteren Modell verwendet werden) bestimmt. Dies erfolgt durch Eingabe geeigneter Startwerte, die dem Zeitpunkt T0 entsprechen, zu den einzelnen Modellen A, B, C und Durchführung entsprechender Simulationen, wie es in der Figur 4 durch "Sim A", "Sim B", "Sim C" angeführt ist.

Als nächstes werden aktualisierte Datensätze für jedes Modell zum nachfolgenden Zeitpunkt T1 wie folgt bestimmt. Der Benutzer wählt eins von den Modellen bzw. Aspekten A, B, C als ein erstes Modell aus. In dem gezeigten Beispiel wählt der Benutzer das Modell A als erstes Modell aus und es werden im Verfahrensschritt 21 für das Modell A einen aktualisierten ersten Datensatz A1 mit aktualisierten Modellspezifischen Daten und einen aktualisierten zweiten Datensatz A1' mit aktualisierten gemeinsamen Daten bestimmt. Diese Bestimmung basiert auf dem initialen modellspezifischen Datensatz A0 und den drei gemeinsamen Datensätzen A0', B0', C0'.

Nun wird ein zweites Modell, in diesem Beispiel das Modell B ausgewählt. Dieses Auswählen kann zusammen (d.h. gleichzeitig) mit dem Auswählen des ersten Modells oder erst nach dem Verfahrensschritt 21 durchgeführt werden. Im Verfahrensschritt 22 werden für das ausgewählte zweite Modell B einen aktualisierten ersten Datensatz B1 mit aktualisierten Modellspezifischen Daten und einen aktualisierten zweiten Datensatz B1' mit aktualisierten gemeinsamen Daten bestimmt. Diese Bestimmung basiert auf dem initialen modellspezifischen Datensatz B0 für das Modell B, dem zuvor im Verfahrensschritt 21 bestimmten aktualisierten zweiten Datensatz A1' für das erste ausgewählte Modell A und den initialen zweiten Datensätzen für alle Modelle außer dem ersten Modell A, d.h. den gemeinsamen Datensätzen B0', C0' für die Modelle B und C.

In ähnlicher Art und Weise wird nun ein drittes Modell, in diesem Beispiel das Modell C ausgewählt. Dies kann zusammen (d.h. gleichzeitig) mit dem Auswählen des ersten und/oder zweiten Modells oder erst nach dem Verfahrensschritt 22 erfolgen. Im Verfahrensschritt 23 werden für das ausgewählte dritte Modell C einen aktualisierten ersten Datensatz C1 mit aktualisierten Modellspezifischen Daten und einen aktualisierten zweiten Datensatz C1' mit aktualisierten gemeinsamen Daten bestimmt. Diese Bestimmung basiert auf dem initialen modellspezifischen Datensatz C0 für das Modell C, dem zuvor im Verfahrensschritt 21 bestimmten aktualisierten zweiten Datensatz A1' für das erste ausgewählte Modell A, dem zuvor im Verfahrensschritt 22 bestimmten aktualisierten zweiten Datensatz B1' für das zweite ausgewählte Modell B und den initialen zweiten Datensätzen für alle Modelle außer dem ersten Modell A und dem zweiten Modell B, d.h. dem gemeinsamen Datensatz C0' für das Modell C.

In Systemen mit mehr als drei Aspekte und entsprechende Modelle werden in ähnlicher Art und Weise fortgefahren bis aktualisierte erste und zweite Datensätze für alle Modelle bestimmt sind.

Nach jedem einzelnen Bestimmungsschritt 21, 22, 23 findet eine automatische Überprüfung der bestimmten Datensätze statt. Falls diese automatische Überprüfung ergibt, dass unzulässige Daten, z.B. Werte außerhalb eines vordefinierten Bereichs bestimmt worden sind, dann wird der entsprechende Bestimmungsschritt 21, 22, 23 widerholt, wobei die der Bestimmung zugrundeliegende Berechnungen nach Möglichkeit geändert bzw. optimiert werden.

Nachdem alle Bestimmungsschritte 21, 22, 23 erfolgreich durchgeführt worden sind, hat der Benutzer nun die Möglichkeit, die aktualisierten Datensätze und gegebenenfalls davon abgeleitete (z.B. berechnete) Daten zu überprüfen. Wenn diese Überprüfung ergibt, dass die Daten nicht zuverlässig sind oder erscheinen, dann werden die Verfahrensschritte 21, 22, 23 wie vom Pfeil 30 gezeigt wiederholt, wobei das Auswählen des ersten, zweiten und dritten Modells durch den Benutzer anders als zuvor gemacht wird, um die Abhängigkeiten zwischen den einzelnen Modellen zu ändern.

Somit kann der Benutzer das Simulationsprogramm in einfacher Weise konfigurieren und dadurch eine optimale Simulation des gesamten Systems mit allen Aspekten erreichen.

### Bezugszeichenliste

- M: Modell
- GD: Gemeinsame Daten
- A: Aspekt / Modell
- B: Aspekt / Modell
- C: Aspekt / Modell
- D: Aspekt / Modell
- E: Aspekt / Modell
- F: Aspekt / Modell
- S: Datensatz
- A₀': Gemeinsamer Datensatz
- A₀: Modellspezifischer Datensatz
- B₀': Gemeinsamer Datensatz
- B₀: Modellspezifischer Datensatz
- C₀': Gemeinsamer Datensatz
- C₀: Modellspezifischer Datensatz
- S1: Datensatz
- A₁': Gemeinsamer Datensatz
- A₁: Modellspezifischer Datensatz
- B₁': Gemeinsamer Datensatz
- B₁: Modellspezifischer Datensatz
- C₁': Gemeinsamer Datensatz
- C₁: Modellspezifischer Datensatz
- T1: Zeitpunkt
- S2: Datensatz
- A₂': Gemeinsamer Datensatz
- A₂: Modellspezifischer Datensatz
- B₂': Gemeinsamer Datensatz
- B₂: Modellspezifischer Datensatz
- C₂': Gemeinsamer Datensatz
- C₂: Modellspezifischer Datensatz
- T2: Zeitpunkt
- S3: Datensatz
- A₃': Gemeinsamer Datensatz
- A₃: Modellspezifischer Datensatz
- B₃': Gemeinsamer Datensatz
- B₃: Modellspezifischer Datensatz
- C₃': Gemeinsamer Datensatz
- C₃: Modellspezifischer Datensatz
- T3: Zeitpunkt
- 10: Verfahrensschritt
- 21: Verfahrensschritt
- 22: Verfahrensschritt
- 23: Verfahrensschritt
- 30: Pfeil

## Patentansprüche

1. Verfahren zum Simulieren einer Mehrzahl von Aspekten eines Systems, das Verfahren aufweisend
Erstellen einer Mehrzahl von Modellen (A, B, C) eines Systems, wobei jedes einzelne Modell einen bestimmten Aspekt des Systems beschreibt,
Bestimmen (10) eines initialen ersten Datensatzes (A0, B0, C0) und eines initialen zweiten Datensatzes (A0', B0', C0') für jedes Modell, wobei der erste initiale Datensatz spezifische Daten aufweist, die nur von dem Modell verwendet werden, und wobei der zweite initiale Datensatz gemeinsame Daten aufweist, die von dem Modell und zumindest einem anderen Modell verwendet werden,
Auswählen eines ersten Modells (A) und eines zweiten Modells (B) aus der Mehrzahl von Modellen (A, B, C),
Bestimmen (21) eines aktualisierten ersten Datensatzes (A1) und eines aktualisierten zweiten Datensatzes (A1') für das erste Modell (A) basierend auf dem initialen ersten Datensatz (A0) für das erste Modell und den initialen zweiten Datensätzen (A0', B0', C0'), und
Bestimmen (22) eines aktualisierten ersten Datensatzes (B1) und eines aktualisierten zweiten Datensatzes (B1') für das zweite Modell (B) basierend auf dem initialen ersten Datensatz (B0) für das zweite Modell, dem aktualisierten zweiten Datensatz (A1') für das erste Modell und den initialen zweiten Datensätzen (B0', C0') für alle Modelle der Mehrzahl von Modellen außer dem ersten Modell.

2. Das Verfahren gemäß dem vorhergehenden Anspruch, wobei das Auswählen ferner ein Auswählen eines dritten Modells (C) aus der Mehrzahl von Modellen (A, B, C) aufweist, das Verfahren ferner aufweisend
Bestimmen (23) eines aktualisierten ersten Datensatzes (C1) und eines aktualisierten zweiten Datensatzes (C1') für das dritte Modell (C) basierend auf dem initialen ersten Datensatz (C0) für das dritte Modell, dem aktualisierten zweiten Datensatz (A1') für das erste Modell, dem aktualisierten zweiten Datensatz (B1') für das zweite Modell und den initialen zweiten Datensätzen (C0') für alle Modelle der Mehrzahl von Modellen außer dem ersten Modell und dem zweiten Modell.

3. Das Verfahren gemäß einem der vorhergehenden Ansprüche, wobei das Auswählen des ersten, des zweiten und gegebenenfalls des dritten Modells aus der Mehrzahl von Modellen (A, B, C) durch einen Benutzer vorgenommen wird.

4. Das Verfahren gemäß einem der vorhergehenden Ansprüche, ferner aufweisend
Überprüfen der aktualisierten ersten Datensätze und der aktualisierten zweiten Datensätze und in Abhängigkeit von dem Überprüfen:
erneutes Auswählen eines ersten Modells, eines zweiten Modells und gegebenenfalls dritten Modells aus der Mehrzahl von Modellen und
erneutes Bestimmen (21, 22, 23) von aktualisierten ersten Datensätzen und aktualisierten zweiten Datensätzen für die ausgewählten Modelle.

5. Das Verfahren gemäß einem der vorhergehenden Ansprüche, ferner aufweisend
Bestimmen eines weiteren aktualisierten ersten Datensatzes (A2) und eines weiteren aktualisierten zweiten Datensatzes (A2') für das erste Modell (A) basierend auf dem aktualisierten ersten Datensatz (A1) für das erste Modell und den aktualisierten zweiten Datensätzen (A1', B1', C1'), und
Bestimmen eines weiteren aktualisierten ersten Datensatzes (B2) und eines weiteren aktualisierten zweiten Datensatzes (B2') für das zweite Modell (B) basierend auf dem aktualisierten ersten Datensatz (B1) für das zweite Modell, dem weiteren aktualisierten zweiten Datensatz (A2') für das erste Modell und den aktualisierten zweiten Datensätzen (B1', C1') für alle Modelle der Mehrzahl von Modellen außer dem ersten Modell.

6. Das Verfahren gemäß dem vorhergehenden Anspruch, ferner aufweisend
Bestimmen eines weiteren aktualisierten ersten Datensatzes (C2) und eines weiteren aktualisierten zweiten Datensatzes (C2') für das dritte Modell (C) basierend auf dem aktualisierten ersten Datensatz (C1) für das dritte Modell, dem weiteren aktualisierten zweiten Datensatz (A2') für das erste Modell, dem weiteren aktualisierten zweiten Datensatz (B2') für das zweite Modell und den aktualisierten zweiten Datensätzen (C1') für alle Modelle der Mehrzahl von Modellen außer dem ersten Modell und dem zweiten Modell.

7. Das Verfahren gemäß Anspruch 5 oder 6, wobei die aktualisierten ersten Datensätze (A1, B1, C1) und die aktualisierten zweiten Datensätze (A1', B1', C1') einem ersten Zeitpunkt entsprechen und wobei die weiteren aktualisierten ersten Datensätze (A2, B2, C2) und die weiteren aktualisierten zweiten Datensätze (A2', B2', C2') einem zweiten Zeitpunkt entsprechen.

8. Vorrichtung zum Simulieren einer Mehrzahl von Aspekten eines Systems, die Vorrichtung aufweisend einen Datenspeicher und einen Prozessor, wobei die Vorrichtung zum Durchführen des Verfahrens gemäß einem der vorhergehenden Ansprüche eingerichtet ist.

9. Computerprogramm aufweisend eine Mehrzahl von computerausführbaren Befehlen, die, wenn sie von einem Prozessor eines Computersystems ausgeführt werden, bewirken, dass der Prozessor das Verfahren gemäß einem er Ansprüche 1 bis 7 durchführt.
